# EUROPEAN PATENT APPLICATION

(11) **EP 3 511 454 A1**
(43) Date of publication of application: **17.07.2019**
(21) Application number: 19151141.9
(22) Date of filing: 10.01.2019
(51) Int. Cl.: D03D 1/00, D03D 15/00, D03D 15/04, D03D 15/08, D02G 3/36, D02G 3/44, A41D 31/04

(54) **TEMPERATURE CONTROL BASED MEMORY TEXTILE AND WEARABLE OBJECT USING THE SAME**

(30) Priority: 12.01.2018 TW 10701341
(71) Applicant: Intelligence Textile Technology Co., Ltd., 10595 Taipei City (TW)
(72) Inventor: LIN, Chen-Hsiang, 10595 Taipei City (TW)
(74) Representative: Rapisardi, Mariacristina

(57) **Abstract**

A temperature control based memory textile has multiple first signaling yarns and multiple alloy yarns. The first signaling yarns act as a temperature control apparatus. A temperature of the alloy yarns is controlled by the first signaling yarns, so as to change a shape and a size of the alloy yarns according to the temperature, and a shape and a size of the temperature control based memory textile can be also changed correspondingly.

## Description

### TECHNICAL FIELD

The present disclosure relates to a textile, and more particularly to a temperature control based memory textile and a wearable object using the same, wherein the temperature control based memory textile can be deformed or restored to its original shape by controlling its temperature.

### BACKGROUND

As technology advances, many practitioners are now trying to incorporate electronic components into wearable objects (such as clothes, pants or shoes) to form smart wearable objects. However, neither a current general wearable objects nor a smart wearable objects can be freely changed in size and shape; so it lacks the flexibility of use and increases the purchase cost of additional wearable objects of different sizes. For example, children's growth peaks at childhood; hence, children are usually bought slightly larger wearable objects to postpone the time when they outgrow the wearable objects, albeit at the cost of fitness. If the parents buy fitted wearable objects for a child, there may need to purchase wearable objects again very soon to the detriment of their clothing budgets.

### SUMMARY

According to at least one embodiment of the present disclosure, the present disclosure provides a temperature control based memory textile that can be deformed or restored to its original shape by controlling its temperature. Therefore, it increases the flexibility of use, or can reduce the purchase cost of buying different size wearable objects. In addition, a wearable object formed by using the temperature control based memory textile can have a touch control based textile, and the touch control based textile can serve as a temperature control based control switch to thereby change the shape or size of the wearable object.

An embodiment of the present disclosure provide a temperature control based memory textile comprising a plurality of first signaling yarns and a plurality of alloy yarns. The plurality of first signaling yarns act as a temperature control apparatus. A temperature of alloy yarns is controlled by the first signaling yarns, so as to change a shape and a size of the alloy yarns according to the temperature, and a shape and a size of the temperature control based memory textile is also changed correspondingly.

Optionally, the temperature control based memory textile is directly woven from the first signaling yarns and the alloy yarns.

Optionally, the temperature control based memory textile further comprises a plurality of first general yarns, wherein a temperature control based textile is woven from the first signaling yarns and the first general yarns, an alloy yarn textile is woven from the alloy yarns, and the temperature control based memory textile is formed by stitching the alloy yarn textile and the temperature control textile face to face.

Optionally, the first signaling yarn comprises a first short-woven fiber, a first sheet conductor and an insulating layer. The first short-woven fiber has a strength being between 26 strands and 40 strands, and serves as a first supporting material. The first sheet conductor enlaces a peripheral surface of the first short-woven fiber in a spiral direction. The insulating layer surrounds the peripheral surface of the first short-woven fiber to cover the first sheet conductor and the first short-woven fiber.

Optionally, a length over width ratio of a vertical section of the first sheet conductor corresponding to the spiral direction is about 10 to 30, and preferably about 20.

Optionally, the alloy yarn comprise a memory alloy wire and an insulating fiber, wherein the insulating fiber enlaces the peripheral surface of the memory alloy wire in the spiral direction.

Optionally, a material of the first sheet conductor is selected from one of a copper nickel alloy, a copper nickel silicon alloy, a copper nickel zinc alloy, a copper nickel tin alloy, a copper chromium alloy, a copper silver alloy, a nickel brass alloy, a phosphor bronze alloy, a beryllium copper alloy, a nickel chromium alloy, a copper tungsten alloy and a stainless steel.

Optionally, a material of the insulating layer is selected from one of a polytetrafluoroethylene (PTFE, Teflon®), a polyethylene terephthalate (PET), an ethylene tetrafluoroethylene (ETFE), a polyvinyl chloride (PVC), and a polyethylene (PE).

Optionally, a conductor wire is rolled to provide the first sheet conductor, wherein X denotes a diameter of a circular cross section of the conductor wire, 4X denotes a length of a vertical section of the first sheet conductor, and X/5 denotes a width of the vertical section of the first sheet conductor.

An embodiment of the present disclosure provides a wearable object which includes one of the above temperature control based memory textile and a controller, wherein the controller is electrically connected to the temperature control based memory textile.

Optionally, the wearable object further comprises the touch control based textile, wherein the touch control based textile is electrically connected to the controller and comprises a plurality of second general yarns and a plurality of second signaling yarns. The touch control based textile is woven from the second general yarns and the second signaling yarns. The second signaling yarn comprises a second short-woven fiber and a second sheet conductor. The second short-woven fiber has a strength being between 26 strands and 40 strands, and serves as a second supporting material. The second sheet conductor enlaces a peripheral surface of the second short-woven fiber in the spiral direction.

Optionally, a length over width ratio of a vertical section of the second sheet conductor corresponding to the spiral direction is about 10 to 30, and preferably about 20.

Accordingly, the embodiments of the present disclosure provide a temperature control based memory textile and a wearable object using the same, wherein the temperature control based memory textile can be deformed or restored to its original shape by controlling its temperature.

For further understanding of the features and technical contents of the present disclosure, reference should be made to the following detailed description and accompanying drawings of the present disclosure, but these descriptions and accompanying drawings are merely illustrative of the present disclosure, rather than imposing any restrictions to the present disclosure and the claims of the present application.

### BRIEF DESCRIPTION OF THE DRAWINGS

To describe technical solutions in embodiments of the present disclosure or in the prior art more clearly, the following briefly introduces the accompanying drawings required for describing the embodiments. Apparently, the accompanying drawings in the following description show merely some embodiments of the present disclosure. The embodiments can be used by persons skilled in the art to obtain other drawings according to the accompanying drawings without creative efforts.
FIG. 1 is a schematic view of a usage state of a wearable object made of the temperature control based memory textile according to an embodiment of the present disclosure.
FIG. 2 is a functional block schematic view of a wearable object according to an embodiment of the present disclosure.
FIG. 3 is a plan schematic view of a temperature control based memory textile according to an embodiment of the present disclosure.
FIG. 4 is a three-dimensional schematic view of a signaling yarn according to an embodiment of the present disclosure.
FIG. 5 is a sectional schematic view of a signaling yarn according to an embodiment of the present disclosure.
FIG. 6 is a schematic view of an implementation of a sheet conductor according to an embodiment of the present disclosure.
FIG. 7 is a three-dimensional schematic view of an alloy yarn according to an embodiment of the present disclosure.
FIG. 8 is a three-dimensional schematic view of a temperature control based memory textile according to another embodiment of the present disclosure.
FIG. 9 is a plan schematic view of a temperature control based textile according to an embodiment of the present disclosure.
FIG. 10 is a plan schematic view of an alloy yarn textile according to an embodiment of the present disclosure.
FIG. 11 is a plan schematic view of a touch control based textile according to an embodiment of the present disclosure.
FIG. 12 is a three-dimensional schematic view of a signaling yarn according to another embodiment of the present disclosure.
FIG. 13 is a sectional schematic view of a signaling yarn according to another embodiment of the present disclosure.

### DETAILED DESCRIPTION OF THE PREFERRED EMBODIMENTS

An embodiment of the present disclosure provides a memory textile capable of changing its shape and size through temperature control and having signaling yarns and alloy yarns. For example, the memory textile is made by weaving the signaling yarns and the alloy yarns at a specific interval and proportion (proportion of numbers of the signaling yarns to numbers of the alloy yarns); or alternatively, the signaling yarns and general yarns can be woven into a temperature control based textile, and the alloy yarns can be woven into an alloy yarn textile, and the temperature control based textile and the alloy yarn textile are stitched face to face to form the temperature control based memory textile.

In general, memory alloys have two transformable phases, a low temperature phase (also known as a martensite phase), and a high temperature phase (also known as an austenite phase). In the martensitic phase, the memory alloy can be deformed into a designed shape, and the memory alloy can be restored to its original shape when the memory alloy is heated to the transforming temperature. By a process of repeated heating and rapid cooling, the relationship between the different lattice structures in the memory alloy can be established, and the memory alloy will retain its new shape upon completion of the process. Simply speaking, the memory alloy is randomly deformed in the martensite phase, but it restores to its original shape when it is heated. The memory alloy also shows super-elasticity, as it is deformed under a small applied force or load. When the force or load is removed, the material automatically restores to its original shape. In addition, there are a variety of alloys currently available as a memory alloy, such as a nickel titanium copper alloy, a copper zinc aluminum alloy, a plastic steel, a high aluminum steel, a high nickel steel, an iron nickel manganese alloy or other types of memory alloys.

In the embodiment of the present disclosure, a memory alloy wire serves as a supporting material of one of the alloy yarns, and an insulating fiber enlaces a peripheral surface of the memory alloy wire in a spiral direction, whereas the insulating fiber is a short-woven or long-woven insulating fiber, and the present disclosure is not limited thereto. The signaling yarns woven with alloy yarns or the signaling yarns near the alloy yarns act as a temperature control apparatus that allows the signaling yarns to heat or cool the alloy yarns and change a size and a shape of the temperature control based memory textile through the electricity transmitted by the signaling yarns.

In addition, each the signaling yarns used as the temperature control apparatus includes a short-woven fiber, a sheet conductor and an insulating layer, wherein the short-woven fiber is used as a supporting material, the sheet conductor enlaces a peripheral surface of the first short-woven fiber in the spiral direction to increase tensile strength and the insulating layer covers a surrounding surface of the short-woven fiber and the sheet conductor. In addition, in order to further increase tensile strength so that the signaling yarns are not easily broken during weaving and washing, in the embodiment of the present disclosure, a strength of the short-woven fiber used as the supporting material is designed to be between 26 strands and 40 strands (for example, 26 strands, 28 strands, 30 strands or 40 strands), and a length over width ratio of vertical section of the sheet conductor to the spiral direction is designed to be between about 10 to 30, and preferably about 20. For example, the signaling yarns described above are not subject to breakage after a continuous 10-day wash test (the general test standard is 7 days) and the results of a tensile test show that the signaling yarns can withstand a pull of about 15 kg weight (the general standard is 3 kg weight).

In addition, the embodiment of the present disclosure also provides a wearable object (for example, clothes, pants, socks, skirts, shoes, etc.) made by the temperature control based memory textile. The wearable object includes a controller and a temperature control based memory textile, wherein the controller is electrically connected to the temperature control based memory textile for providing electric energy to the temperature control based memory textile so that the temperature control based memory textile changes with its temperature. In addition, the wearable object can further include a touch control based textile, and the touch control based textile is electrically connected to the controller and used as a control switch for temperature control, for example, as a switch for turning on the temperature control function, turning off the temperature control function, raising the temperature, and lowering the temperature.

An implementation of the touch control based textile described above is to weave the signaling yarns without the insulating layer and the general yarns at specific intervals and proportion. The controller sends scan signals to one end of the signaling yarns without the insulating layer, and the controller receives touch sensing signals transmitted by the other end of the signaling yarns without the insulating layer to determine whether there is a touching object (for example, a finger or other touching object) to touch the touch control based textile.

Furthermore, considering the wearer's tactile sensations, a size of the above signaling yarns and alloy yarns is about the same as a size of the general yarns, whereas the temperature control based memory textile and the touch control based textile have a hardness low enough to preclude "foreign body" feel, thereby enhancing the wearer's user experience.

On the other hand, a material of the sheet conductor can be alloy, such as a copper nickel alloy, a copper nickel silicon alloy, a copper nickel zinc alloy, a copper nickel tin alloy, a copper chromium alloy, a copper silver alloy, a nickel brass alloy, a phosphor bronze alloy, a beryllium copper alloy, a nickel chromium alloy, a copper tungsten alloy, a stainless steel or other commercially available conductive alloys, but the present disclosure is not limited thereto.

In addition, a material of the short-woven fiber and the insulating fiber is a polyester, a polyamides, a polyacrylonitrile, a polyethylene, a polypropylene, a cellulose, a protein, an elastic fiber, a polyvinyl fluoride, a polyparaphenylene benzobisoxazole, a polyether ketones or one of carbon and glass fiber, and a material of the insulating layer is a polytetrafluoroethylene, a polyethylene terephthalate, a fluoroplastic film, a polyvinyl chloride, a polyethylene or other polymer insulation materials, but the present disclosure is not limited thereto.

Accompanying with the drawings, the follows will further describe the temperature control based memory textile and the wearable object using the same in the embodiments of the present disclosure.

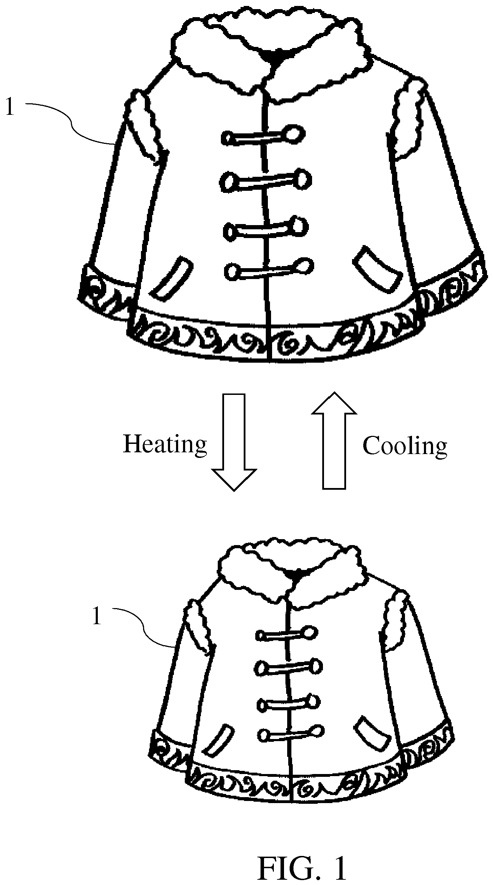

Firstly, referring to FIG. 1, FIG. 1 is a schematic view of a usage state of a wearable object made of a temperature control based memory textile according to an embodiment of the present disclosure. As shown in FIG. 1, a shape of the wearable object 1 (for example, a child's clothing) can be restored to its original shape after being heated to a certain temperature, thus making a size of the wearable object 1 from large to small. Also, when the wearable object 1 is to be deformed to a designed shape, the wearable object 1 can be cooled so that the size of the wearable object 1 can grow from small to large. In addition, the present disclosure does not limit the type of the wearable object 1 to a children's clothing, that is, the type of the wearable object 1 can be clothes, shoes, skirts or socks for any child, pet or adult.

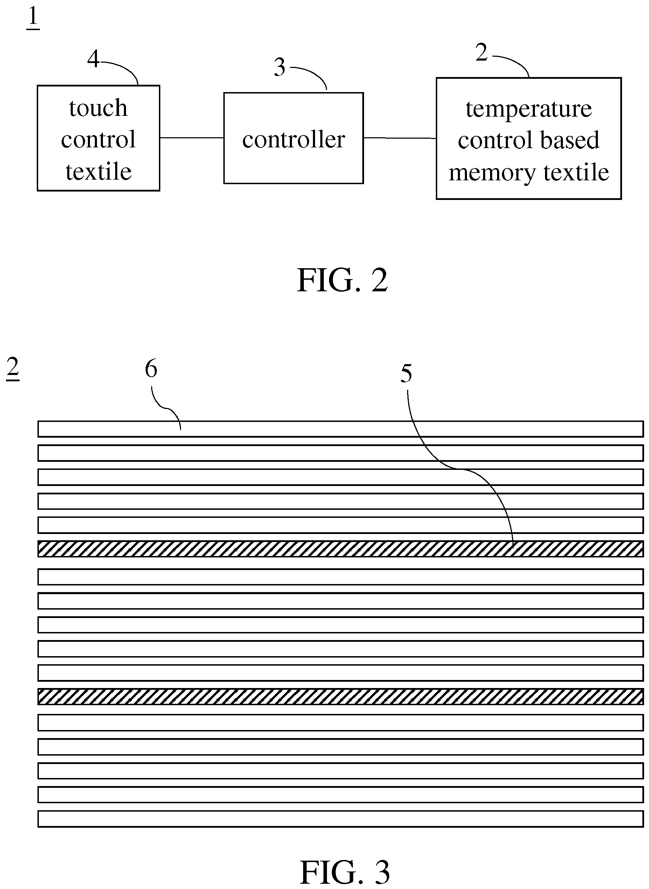

Then, please refer to FIG. 2. FIG. 2 is a functional block schematic view of a wearable object according to an embodiment of the present disclosure. The wearable object 1 includes a temperature control based memory textile 2, a controller 3 and a touch control based textile 4, wherein the controller 3 is electrically connected to the temperature control based memory textile 2 and the touch control based textile 4, for example, through a signaling textile formed by weaving the signaling yarns with insulating layer and the general yarns to make the electrical connection, but the present disclosure is not limited thereto.

The temperature control based memory textile 2 has the alloy yarns and the signaling yarns (with the insulating layer) as the temperature control apparatus. Through the control of the controller 3, the signaling yarns can heat or cool the alloy yarns to make a shape of the alloy yarns change, and a shape and a size of the control based memory textile 2 is also to be changed. The touch control based textile 4 can be used as a control switch to control the temperature, for example, as a switch for turning on the temperature control function, turning off the temperature control function, raising the temperature and lowering the temperature. In short, the controller 3 can determine whether the touch control based textile 4 is touched and generate a corresponding control signal to control the temperature. Please note that, in other embodiments, the wearable object1 can have no touch control based textile 4, instead, the wearable object 1 can be implemented by using other control switches.

Then, please refer to FIG. 3. FIG. 3 is a plan schematic view of a temperature control based memory textile according to an embodiment of the present disclosure. In the present embodiment, the temperature control based memory textile 2 can be weaved by signaling yarns 5 and alloy yarns 6, wherein each two adjacent signaling yarns 5 are weaved between five alloy yarns 6. However, the present disclosure is not limited thereto. The proportion of numbers of the signaling yarns 5 to numbers of the alloy yarns 6 and the interval between two adjacent alloy yarns 6 (or between an alloy yarn 6 and an signaling yarn 5 adjacent to the alloy yarn 6) is determined as needed. Furthermore, in other embodiments, the general yarns can also be woven into the temperature control based memory textile 2, that is, the temperature control based memory textile 2 can also be woven from the signaling yarns 5, the alloy yarns 6 and the general yarns.

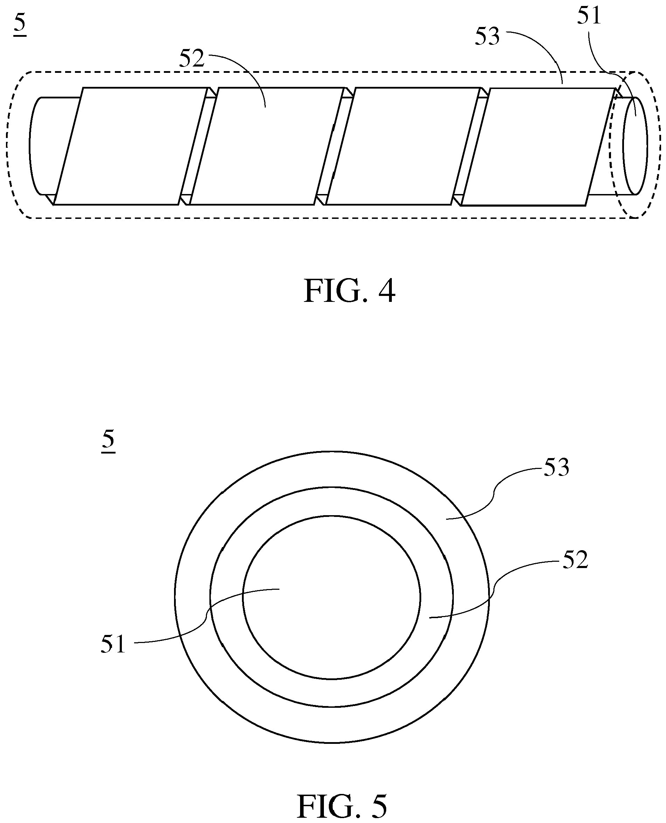

Then, please refer to FIG. 4 and FIG.5. FIG. 4 is a three-dimensional schematic view of a signaling yarn according to an embodiment of the present disclosure, and FIG. 5 is a sectional schematic view of a signaling yarn according to an embodiment of the present disclosure. The signaling yarn 5 comprises a short-woven fiber 51, a sheet conductor 52 and an insulating layer. The short-woven fiber 51 is used as a supporting material for supporting the sheet conductor 52 enlacing the short-woven fiber 51. The sheet conductor 52 enlaces a peripheral surface of the short-woven fiber 51 in the spiral direction. The manner of the sheet conductor 52 enlacing the peripheral surface of the short-woven fiber 51 in the spiral direction increases a tensile strength of the signaling yarns 5. The insulating layer 53 surrounds the peripheral surface of the short-woven fiber 51 to cover the sheet conductor 52 and the short-woven fiber 51.

Optionally, a tensile strength of the signaling yarns 5 can also be further increased by selecting a strength of the short-woven fiber 51 and/or a length over width ratio of a vertical section of the sheet conductor 52 corresponding to the spiral direction. In the present embodiment, the strength of the short-woven fiber 51 is designed to be 30 strands, and the length over width ratio of a vertical section of the sheet conductor 52 corresponding to the spiral direction is designed to be 20, but the present disclosure is not limit thereto. For instance, the strength of the short-woven fiber 51 can be designed to be 26 strands, 28 strands, 30 strands or 40 strands; or, the length over width ratio of the vertical section of the sheet conductor corresponding to the spiral direction is designed to be about between 10 and 30.

In the present embodiment, a material of the short-woven fiber 51 is a polyester, a polyamides, a polyacrylonitrile, a polyethylene, a polypropylene, a cellulose, a protein, an elastic fiber, a polyvinyl fluoride, a polyparaphenylene benzobisoxazole, a polyether ketones or one of carbon and glass fiber, and the present disclosure does not limit thereto. The material of the short-woven fiber 51 is determined as needed.

In the present embodiment, a material of the sheet conductor 52 is an alloy, such as a copper nickel alloy, a copper nickel silicon alloy, a copper nickel zinc alloy, a copper nickel tin alloy, a copper chromium alloy, a copper silver alloy, a nickel brass alloy, a phosphor bronze alloy, a beryllium copper alloy, a nickel chromium alloy, a copper tungsten alloy, a stainless steel or other commercially available conductive alloys, but the type of the alloy of the present disclosure is not intending to limit the present disclosure.

In the present embodiment, a material of the insulating layer 53 is a polytetrafluoroethylene, a polyethylene terephthalate, an ethylene tetrafluoroethylene, a polyvinyl chloride, a polyethylene or other polymer insulation materials, but the present disclosure is not limited thereto. The material of the sheet conductor 52 and the material of the insulating layer 53 are determined as needed. For instance, the signaling yarns 5 can be used as the temperature control apparatus in the temperature control based memory textile 2. Therefore, the sheet conductor 52 is made of an alloy with a larger resistance value, and the insulating layer 3 is made of an insulating material with high heat resistance (for example, polytetrafluoroethylene).

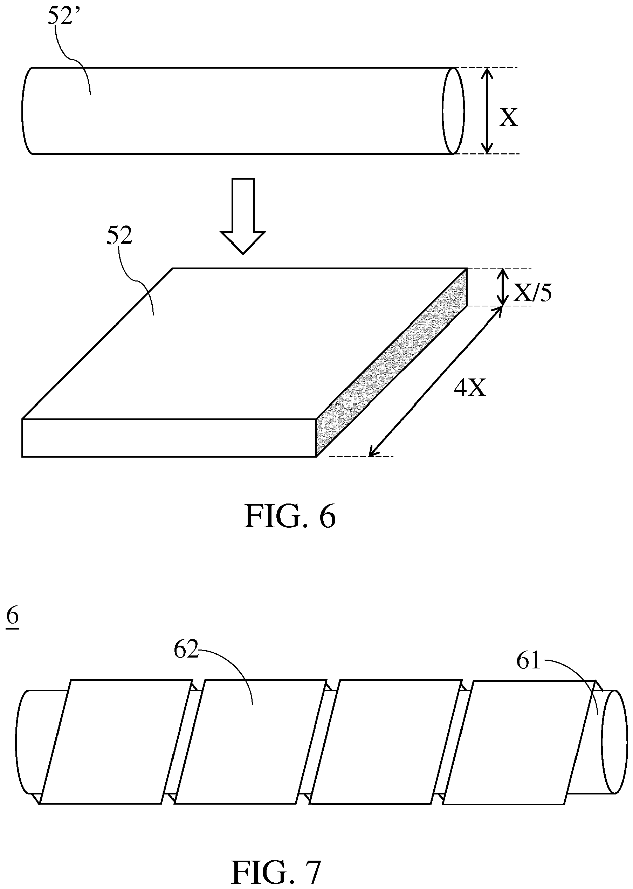

Referring to FIG. 6, FIG. 6 is a schematic view of an implementation of a sheet conductor according to an embodiment of the present disclosure. In the present embodiment, a length and a width of a vertical section of the sheet conductor 52 are denoted by 4X and X/5, respectively, wherein X denotes a diameter of a circular cross section of the conductor wire 52'. The conductor wire 52' is rolled by a rolling mill to form the sheet conductor 52. However, the making of sheet conductor 52 described above is not intended to be a limitation of the present disclosure. In other words, there are also different embodiments for making the sheet conductor as the same as the sheet conductor 52 of the present embodiment.

Then, referring to FIG. 7, FIG. 7 is a schematic view of an implementation of a sheet conductor according to an embodiment of the present disclosure. A memory alloy wire 61 serves as a supporting material of the alloy yarn 6 and an insulating fiber 62 enlaces a peripheral surface of the memory alloy wire 61 in the spiral direction. The insulating fiber 62 is a short-woven or long-woven insulating fiber, and the present disclosure is not limited thereto. The memory alloy wire 61 is deformed or restored to its original shape according to a temperature. Therefore, the temperature control based memory textile 2 is deformed or restored to its original shape according to the temperature. A material of the memory alloy wire 61is a memory alloy, such as a nickel titanium copper alloy, a copper zinc aluminum alloy, a plastic steel, a high aluminum steel, a high nickel steel, an iron nickel manganese alloy or other types of memory alloys, and the present disclosure is not limited thereto.

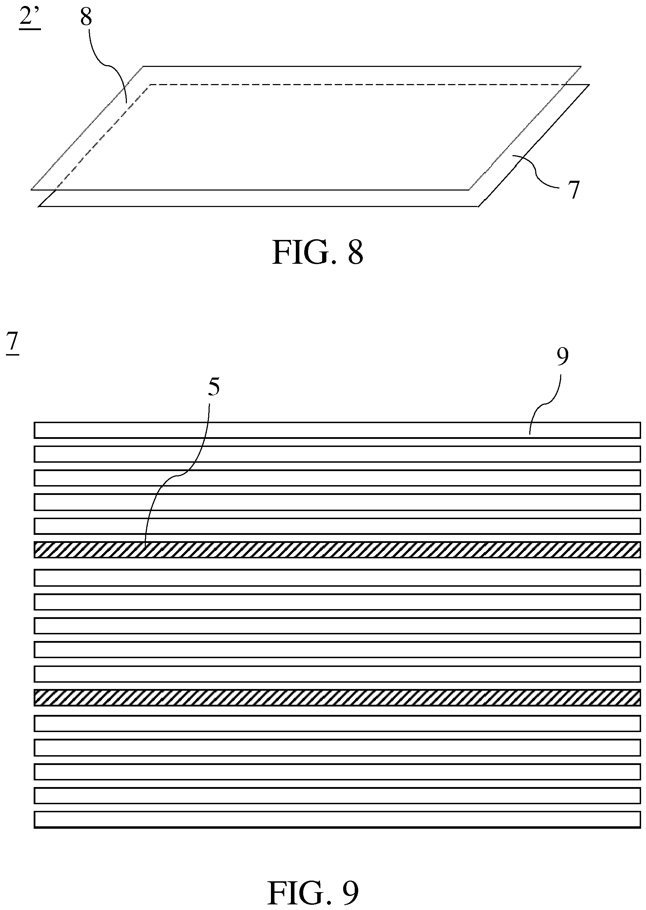

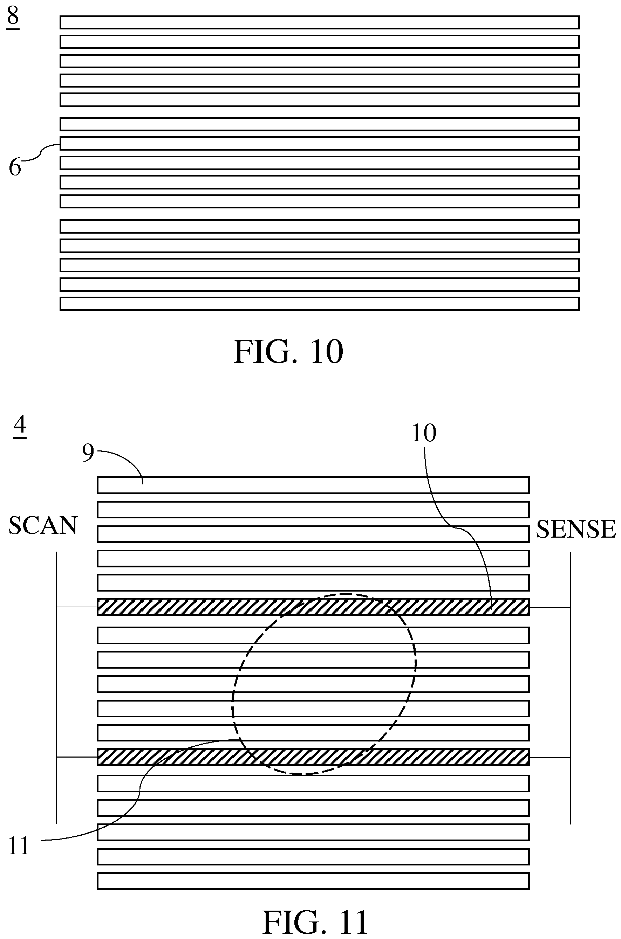

Then, please referring to FIG. 8 to FIG.10, FIG. 8 is a three-dimensional schematic view of a temperature control based memory textile according to another embodiment of the present disclosure, FIG. 9 is a plan schematic view of a temperature control based textile according to an embodiment of the present disclosure, and FIG. 10 is a plan schematic view of an alloy yarn textile according to an embodiment of the present disclosure. The temperature control based memory textile 2' is implemented by stitching the alloy yarn textile 8 and the temperature control textile 7 face to face.

As shown in Fig. 9, the temperature control based textile 7 is weaved by the signaling yarns 5 and general yarns 9, wherein each two adjacent signaling yarns 5 are woven between five general yarns 9. However, the present disclosure is not limited thereto. The proportion of numbers of the signaling yarns 5 to numbers of the general yarns 9 and the interval between two adjacent general yarns 9 (or between a general yarn 9 and an signaling yarn 5 adjacent to the general yarn 9) is determined as needed. As shown in Fig. 10, the alloy yarn textile 8 is woven by the plurality of alloy yarns 6. As shown in FIG. 8, a shape and a size of the alloy yarn textile 8 can be further changed by heating or cooling the alloy yarn textile 8 through the temperature control based textile 7.

An implementation of the touch control based textile 4 is further described below. FIG. 11 is a plan schematic view of the touch control based textile according to an embodiment of the present disclosure. The touch control based textile 4 is weaved by the signaling yarns 10 without the insulating layer and the general yarns 9, wherein each two adjacent signaling yarns 10 are weaved between five alloy yarns 6. However, the present disclosure is not limit thereto, a proportion of numbers of the signaling yarns 10 to numbers of the general yarns 9 and the interval between two adjacent general yarns 9 (or between a general yarns 9 and an signaling yarn 10 adjacent to the general yarn 9) can be determined as needed.

One end of each of the signaling yarns 10 receives a scan signal SCAN transmitted by the controller 3, and the controller 3 receives a touch sensing signal SENSE transmitted by the other end of each of the signaling yarns 10 to determine whether there is a touch object 11 (for example, a finger or other touch object) to touch the touch control based textile 4. Because the signaling yarns 10 are not covered by the insulating layer, when the touch object 11 touches the touch control based textile 4, the impedance generated by the touch object 11 changes the touch sensing signal SENSE, so that the controller 3 can determine whether there is a touch object 11 touching the touch control based textile 4 (e.g. the touch control based textile 4 is a resistive touch sensing device).

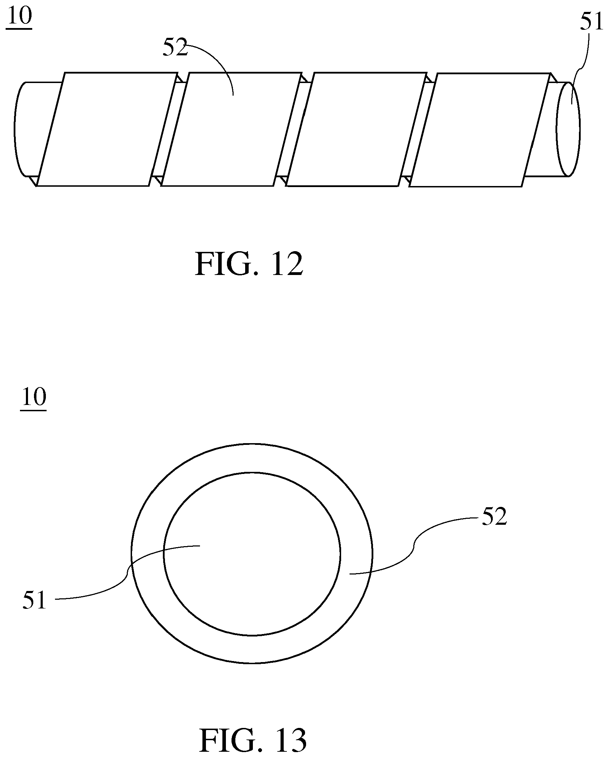

In addition, an implementation of the signaling yarns 10 without the insulating layer is described below. Please referring to FIG. 12 and FIG. 13, FIG. 12 is a three-dimensional schematic view of a signaling yarn according to another embodiment of the present disclosure, and FIG. 13 is a sectional schematic view of a signaling yarn according to another embodiment of the present disclosure. As shown in FIG.12 and FIG. 13, each of the signaling yarns 10 comprise a short-woven fiber51 and a sheet conductor 52. The short-woven fiber 51 is used as a supporting material for supporting the sheet conductor 52 surrounding the short-woven fiber 51. The sheet conductor 52 enlaces a peripheral surface of the short-woven fiber 51 in the spiral direction. The manner of the sheet conductor 52 enlacing the peripheral surface of the short-woven fiber 51 in the spiral direction increases a tensile strength of the signaling yarns 10.

Optionally, a tensile strength of the signaling yarns 10 can also be further increased by the choice of a strength of the short-woven fiber 51 and/or a choice of a length over width ratio of a vertical section of the sheet conductor 52 corresponding to the spiral direction. In the present embodiment, the strength of the short-woven fiber 51 is designed to be 30 strands, and the length over width ratio of a vertical section of the sheet conductor 52 corresponding to the spiral direction is designed to be 20, but the present disclosure is not limit thereto. For instance, the strength of the short-woven fiber 51 is designed to be 26 strands, 28 strands, 30 strands or 40 strands; or, the length over width ratio of the vertical section of the sheet conductor corresponding to the spiral direction is designed to be about between 10 and 30.

Accordingly, the embodiments of the present disclosure provides the temperature control based memory textile and the wearable object using the same, and the temperature control based memory textile can change its shape and size according to the temperature, so that the temperature control based memory can provide usage flexibility and reduce the purchase cost of purchasing wearable objects of different sizes. Furthermore, the signaling yarns used in the temperature control based memory textile and the wearable object have good strength and are not easily broken during the washing process. In addition, the temperature control based memory textile and the wearable object do not have "foreign body" feel, and thus can provide a good user experience to the wearer. In addition, the wearable object can include the touch control based textile as the temperature control switch, and thus it provides users more convenient operation.

## Claims

1. A temperature control based memory textile (2), comprising:
a plurality of first signaling yarns (5), acting as a temperature control apparatus; and
a plurality of alloy yarns (6), wherein a temperature of alloy yarns (6) is controlled by the first signaling yarns (5), so as to change a shape and a size of the alloy yarns (6) according to the temperature, and a shape and a size of the temperature control based memory textile (2) is also changed correspondingly.

2. The temperature control based memory textile of claim 1, wherein the temperature control based memory textile (2) is directly woven from the first signaling yarns (5) and the alloy yarns (6).

3. The temperature control based memory textile of claim 2, wherein the first signaling yarn (5) comprises:
a short-woven fiber (51), having a strength being between 26 strands and 40 strands, and serving as a first supporting material;
a sheet conductor (52), enlacing a peripheral surface of the short-woven fiber (51) in a spiral direction, wherein a length over width ratio of a vertical section of the sheet conductor (52) corresponding to the spiral direction is about 10 to 30; and
an insulating layer (53), surrounding the peripheral surface of the short-woven fiber (51) to cover the sheet conductor (52) and the short-woven fiber (51).

4. The temperature control based memory textile of claim 3, wherein the alloy yarn (6) comprises:
a memory alloy wire (61); and
an insulating fiber (62), enlacing the peripheral surface of the memory alloy wire (61) in the spiral direction.

5. The temperature control based memory textile of claim 3, wherein a conductor wire (52') is rolled to provide the sheet conductor (52), with X denoting a diameter of a circular cross section of the conductor wire (52'), 4X denoting a length of the vertical section of the sheet conductor (52), and X/5 denoting a width of the vertical section of the sheet conductor (52).

6. The temperature control based memory textile of claim 1, further comprising:
a plurality of first general yarns (9), wherein a temperature control based textile (7) is woven from the first signaling yarns (5) and the first general yarns (9), an alloy yarn textile (8) is woven from the alloy yarns (6), and the temperature control based memory textile (2) is formed by stitching the alloy yarn textile (8) and the temperature control textile (7) face to face.

7. The temperature control based memory textile of claim 6, wherein the first signaling yarn (5) comprises:
a short-woven fiber (51), having a strength being between 26 strands and 40 strands, and serving as a first supporting material;
a sheet conductor (52), enlacing a peripheral surface of the short-woven fiber (51) in a spiral direction, wherein a length over width ratio of a vertical section of the sheet conductor (52) corresponding to the spiral direction is about 10 to 30; and
an insulating layer (53), surrounding the peripheral surface of the short-woven fiber (51) to cover the sheet conductor (52) and the short-woven fiber (51).

8. The temperature control based memory textile of claim 7, wherein the alloy yarn (6) comprises:
a memory alloy wire (61); and
an insulating fiber (62), enlacing the peripheral surface of the memory alloy wire (61) in the spiral direction.

9. The temperature control based memory textile of claim 7, wherein a conductor wire (52') is rolled to provide the sheet conductor (52), with X denoting a diameter of a circular cross section of the conductor wire (52'), 4X denoting a length of the vertical section of the sheet conductor (52), and X/5 denoting a width of the vertical section of the sheet conductor (52).

10. The temperature control based memory textile of claim 1, wherein the first signaling yarn comprises:
a short-woven fiber (51), having a strength being between 26 strands and 40 strands, and serving as a first supporting material;
a sheet conductor (52), enlacing a peripheral surface of the short-woven fiber (51) in a spiral direction, wherein a length over width ratio of a vertical section of the sheet conductor (52) corresponding to the spiral direction is about 10 to 30; and
an insulating layer (53), surrounding the peripheral surface of the short-woven fiber (51) to cover the sheet conductor (52) and the short-woven fiber (51).

11. The temperature control based memory textile of claim 10, wherein the alloy yarn (6) comprises:
a memory alloy wire (61); and
an insulating fiber (62), enlacing the peripheral surface of the memory alloy wire (61) in the spiral direction.

12. The temperature control based memory textile of claim 10, wherein a material of the sheet conductor (52) is selected from one of a copper nickel alloy, a copper nickel silicon alloy, a copper nickel zinc alloy, a copper nickel tin alloy, a copper chromium alloy, a copper silver alloy, a nickel brass alloy, a phosphor bronze alloy, a beryllium copper alloy, a nickel chromium alloy, a copper tungsten alloy and a stainless steel.

13. The temperature control based memory textile of claim 10, wherein a material of the insulating layer (53) is selected from one of a polytetrafluoroethylene, a polyethylene terephthalate, an ethylene tetrafluoroethylene, a polyvinyl chloride, and a polyethylene.

14. The temperature control based memory textile of claim 10, wherein a conductor wire (52') is rolled to provide the sheet conductor (52), with X denoting a diameter of a circular cross section of the conductor wire (52'), 4X denoting a length of the vertical section of the sheet conductor (52), and X/5 denoting a width of the vertical section of the sheet conductor (52).

15. The temperature control based memory textile of claim 1, wherein the alloy yarn (6) comprises:
a memory alloy wire (61); and
an insulating fiber (62), enlacing the peripheral surface of the memory alloy wire (61) in a spiral direction.

16. A wearable object (1), comprises:
a temperature control based memory textile (2), comprising a plurality of first signaling yarns (5) and a plurality of alloy yarns (6), wherein the first signaling yarns (5) act as a temperature control apparatus, a temperature of alloy yarns (6) is controlled by the first signaling yarns (5), so as to change a shape and a size of the alloy yarns (6) according to the temperature, and a shape and a size of the temperature control based memory textile (2) is also changed correspondingly; and
a controller (3), electrically connected to the temperature control based memory textile (2).

17. The wearable object of claim 16, further comprising:
a touch control based textile (4), electrically connected to the controller (3), comprising a plurality of general yarns (9) and a plurality of second signaling yarns (10), wherein the touch control based textile (4) is woven from the general yarns (9) and the second signaling yarns (10) and the second signaling yarn (10) comprises:
a short-woven fiber (51), having a strength being between 26 strands and 40 strands, and serving as a supporting material; and
a sheet conductor (52), enlacing a peripheral surface of the short-woven fiber (51) in a spiral direction, wherein a length over width ratio of a vertical section of the sheet conductor (52) corresponding to the spiral direction is about 10 to 30.

18. The wearable object of claim 16, wherein the first signaling yarn (5) comprises:
a short-woven fiber (51), having a strength being between 26 strands and 40 strands, and serving as a supporting material;
a sheet conductor (52), enlacing a peripheral surface of the short-woven fiber (51) in a spiral direction, wherein a length over width ratio of a vertical section of the sheet conductor (52) corresponding to the spiral direction is about 10 to 30; and
an insulating layer (53), surrounding the peripheral surface of the short-woven fiber (51) to cover the sheet conductor (52) and the short-woven fiber (51).

19. The wearable object of claim 18, wherein a conductor wire (52') is rolled to provide the sheet conductor (52), with X denoting a diameter of a circular cross section of the conductor wire (52'), 4X denoting a length of the vertical section of the sheet conductor (52), and X/5 denoting a width of the vertical section of the sheet conductor (52).

20. The wearable object of claim 16, wherein the alloy yarn (6) comprises:
a memory alloy wire (61); and
an insulating fiber (62), enlacing the peripheral surface of the memory alloy wire (61) in a spiral direction.
